# EUROPEAN PATENT APPLICATION

(11) **EP 2 362 341 A1**
(43) Date of publication of application: **31.08.2011**
(21) Application number: 09833419.6
(22) Date of filing: 14.12.2009
(51) Int. Cl.: G06Q 50/00, G06Q 10/00, G06Q 30/00

(54) **INCINERATION SYSTEM FOR ORGANIC PRODUCT**

(30) Priority: 15.12.2008 JP 2008318364; 12.08.2009 JP 2009187060
(71) Applicant: Agri Future Joetsu Co., Ltd., Oaza, Joetsu-shi, Niigata 9430132 (JP)
(72) Inventor: OHNO, Takashi, Niigata 943-0132 (JP)
(74) Representative: Kramer - Barske - Schmidtchen
(86) International application number: PCT/JP2009/070851
(87) International publication number: WO 2010/071116

(57) **Abstract**

An object of the present invention is to provide an incineration system for an organic product which stimulates a positive attitude to developing and using biomass-derived products, reduces the amount of waste disposal, and reduces global warming gases released to the environment.

The system comprising a registration device which regards an amount of carbon dioxide emissions generated by burning of a petroleum-derived component equivalent to the biomass-derived component contained in the organic product as an emission reduction amount, and registers the emission reduction amount in association with a product ID of the organic product; and a reader terminal which reads the product ID when the organic product is provided.

## Description

### TECHNICAL FIELD

The present invention relates to an incineration system for an organic product for the purpose of reducing global warming gases released in the atmosphere when used products are incinerated, and more particularly for promoting the use of a product with a large mixing amount of biomass-derived component.

### BACKGROUND ART

The Kyoto Protocol, which came into effect on February 16th, 2005, is an international framework requiring the ratifying countries to implement a specified reduction amount with the aim of reducing the emissions of global warming greenhouse gases (such as carbon dioxide and methane) into the atmosphere.
The Kyoto Protocol allows international emissions trading to achieve greenhouse gas reduction targets.
In the track of this, countries are making efforts to establish a national emissions trading scheme such that an operator calculates and reports greenhouse gas emissions by itself; and based on this report, these countries' government allocates emission quotas to the operator to allow the operator to sell and buy extra emission quotas determined by subtracting the emissions as a commodity (emission rights) between the operators (for example, see Japan's Voluntary Emissions Trading Scheme (JVETS), Ministry of the Environment Government of Japan).

Meanwhile, active efforts have been made to effectively use biomass (biological resources) for industrial purposes to reduce the use of petroleum-derived substances (for example, see Biomass-Nippon Strategy, Ministry of Agriculture, Forestry & Fisheries, Japan). Here, biomass refers to renewable organic resources of the animals and plants which absorb carbon dioxide in the atmosphere and grow by photosynthesis using solar energy. Therefore, biomass-based industrial products which are incinerated and release carbon dioxide in the atmosphere do not contribute to an increase in CO₂ concentration, and thus are called carbon-neutral (carbon-free or carbon-offset).

Moreover, the widespread practice at stores is that when goods are purchased at a store such as a department store, a supermarket, and a convenience store, a disposable shopping bag (commonly known as plastic shopping bags, carrier bags or plastic grocery bags) made of a polyethylene sheet is provided free of charge for carrying back the goods.
The cash register bag is excellent in water resistance, chemical resistance, and mechanical strength. Therefore, after use, the bag is often reused as a collection bag of waste discharged at home.
Meanwhile, from the point of view of environmental protection, the activities for promoting "My Bag" or ecology bag and charged cash register bag are actively encouraged to reduce the use of disposable polyethylene cash register bags.

### DISCLOSURE OF THE INVENTION

However, the national emissions trading scheme in progress of development is mainly adapted for industrial sectors but is skeptical about achieving reduction targets in other sectors, especially in household sectors. Efforts are made to achieve the reduction targets in the household sectors at local government and regional levels. However, most of the measures impose the burden of achieving the targets on a specific portion of the distribution channel of a product from its production, selling, consumption and disposal, thus failing to yield results.
In fact, the substitution from petroleum-derived products to biomass-derived products is delayed in progress due to factors increasing costs. Further, there is little direct advantage to users in using (or producing) products with a large mixing amount of biomass-derived component, thus causing a negative attitude to developing new biomass-derived products.
Moreover, in reality, the reduction of use of cash register bags involves an exercise of coercive force against the inclination of consumers demanding convenience, thus causing difficulty in progress.

In order to solve the above problems, an object of the present invention is to provide an incineration system for an organic product which stimulates a positive attitude to developing and using biomass-derived products, reduces the amount of waste disposal, and reduces global warming gases released to the environment.
Further, another object of the present invention is to provide an incineration system for an organic product which reduces emissions of carbon dioxide involved in waste disposal at general household without imposing the cost burden on a specific sector of the product production, selling, consumption and disposal and without exercising coercive force.

### BRIEF DESCRIPTION OF THE DRAWINGS

Fig. 1 is an entire configuration view illustrating a first embodiment of an incineration system for an organic product according to the present invention.
Fig. 2 is a front view illustrating an example of an organic product (such as a cash register bag or a shopping bag and a waste collection bag) for use in the first embodiment.
Fig. 3 is a front view illustrating an example of a point card issued with a user ID embedded for identifying the user of the incineration system for an organic product according to the present invention.
Fig. 4 (a) is a table of an information list of cash register bags authorized for use in an embodiment of the present invention and registered in a registration device on a communication network; and Fig. 4(b) is a table of a user list containing personal information about users registered in an embodiment of the present invention and their registration points.
Fig. 5 is a time chart illustrating the procedure for the incineration system for an organic product according to the first embodiment.
Fig. 6 is an entire configuration view illustrating the incineration system for an organic product according to a second embodiment of the present invention.
Fig. 7 is a perspective view illustrating an example of an organic product (such as a cash register bag and a recycled waste collection bag) for use in the second embodiment of the present invention.
Fig. 8 is a time chart illustrating the procedure for the incineration system for an organic product according to the second embodiment of the present invention.

### DETAILED DESCRIPTION

### <First embodiment>

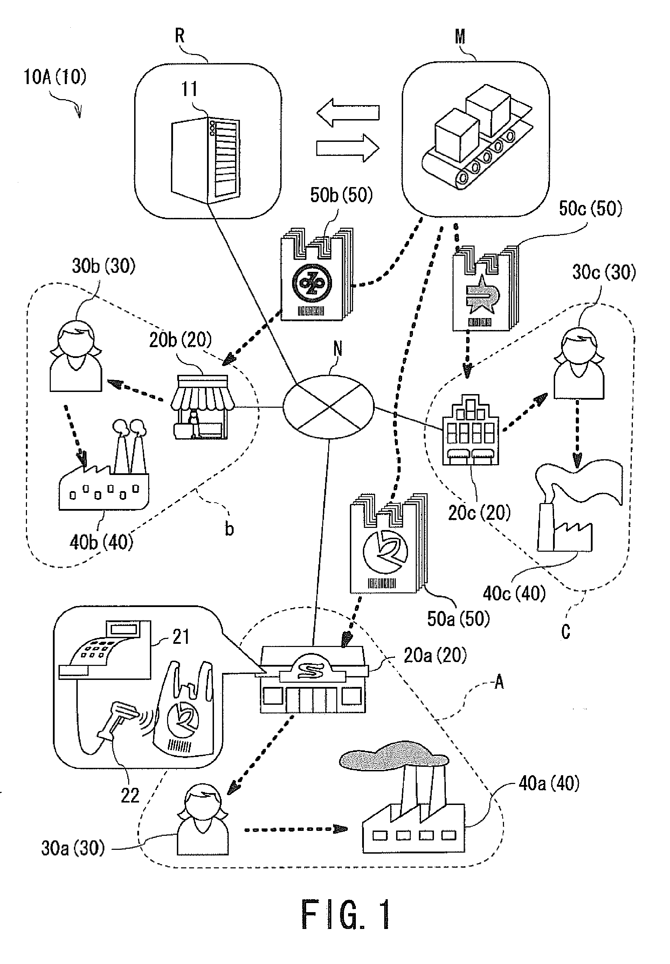

Hereinafter, embodiments of the present invention will be described by referring to the accompanying drawings.
By referring to Figs. 1 to 5, an incineration system 10A for organic products (hereinafter simply referred to as a system 10A) according to the first embodiment will be described.
As illustrated in Fig. 1, the system 10A according to the first embodiment is implemented in collaboration with a certification body R managing a registration device 11 connected to a communication network N; a manufacturer M manufacturing an organic product 50; a store 20 providing a user 30 with the organic product 50; and an incineration site 40 collecting and incinerating the organic product 50 used and discharged by the user 30.

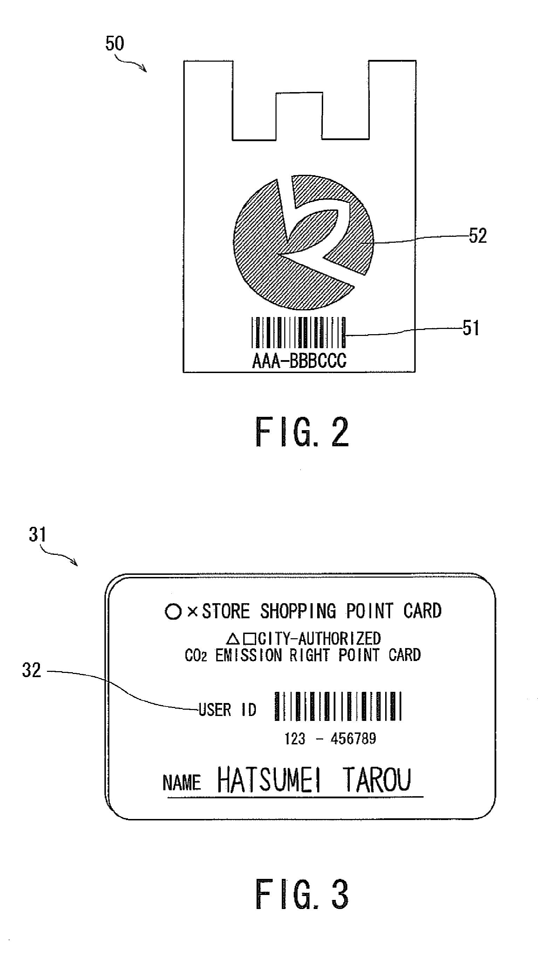

The incineration sites 40 (40a, 40b, and 40c) incinerate combustible waste discharged by users 30 (30a, 30b, and 30c) residing in respective jurisdictional districts A, B, and C.
The stores 20 (20a, 20b, and 20c) are classified for each of the districts A, B, and C. The figure illustrates one store for each district, but the number of stores is not limited to this and no relationship about the type of business and management between the stores is required.
It is assumed that an organic product 50 sold (distributed) at a store 20 (e.g., a store 20a) is bought by (provided to) a user 30 (30a) in the district (district A) and disposed by an incineration site 40 (40a) in charge of the district.
Such an organic product 50 is not adapted for all goods, but the examples thereof include a waste collection bag and a cash register bag provided when goods are settled at a cash register counter (see Fig. 2).

The stores 20 (20a, 20b, and 20c) sell goods to people coming to the store and include a plurality of processing terminals 21 (cash registers) for making settlement for goods purchased. The processing terminals 21 can be connected to the communication network N via a router (not shown) provided in the store 20 to exchange various information (data) to and from the registration device 11. Note that the communication network N may be one using a dedicated line or the Internet.

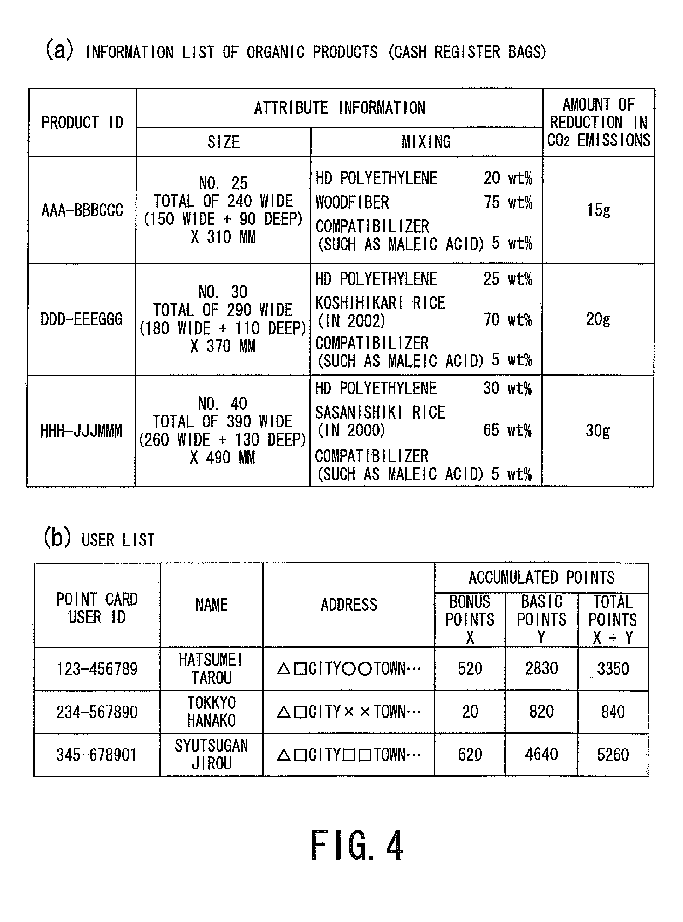

The processing terminal 21 includes a reader terminal 22 attached thereto, which reads a user ID 32 from a point card 31 (Fig. 3) to identify the user 30. In addition, the processing terminal 21 can settle for goods purchased.
Further, the processing terminal 21 can use the reader terminal 22 to read a product ID 51 from the cash register bag 50 (the organic product 50 in Fig. 2) given to the user 30 for carrying back the goods purchased and to send the code data to the registration device 11. More specifically, each cash register bag 50 has various attributes such as the type, the size, and the manufacturer (see Fig 4(a) as needed); and the information sent to the certification body R includes the attributes of each cash register bag provided and the number of cash register bags given to the user 30.

The registration device 11 registers the emission reduction amount corresponding to the product ID 51 in association with the incineration site 40 (the incineration site ID) which collects and incinerates the cash register bag 50. The emission reduction amount registered in association with the incineration site ID can be freely transferred and traded as emission rights. In other word, the reader terminal 22 reads the product ID 51 attached to the organic product 50 and thus the amount of reduction in emissions to be released by incinerating the cash register bag 50 can be independently distributed as emission rights.

As illustrated in Fig. 2, the cash register bag 50 (the organic product 50) has a print code 51 (product ID 51) printed thereon to be read by the reader terminal 22.
The product ID 51 is not limited to the illustrated barcode, but may be a two-dimensional code (e.g., QR code). Moreover, the organic product 50 is not limited to the cash register bag (or the waste collection bag, and thus the product ID 51 may be one recorded by a radio chip (e.g., RFID) or a magnetic detection code.

By reading the print code 51 (product ID) (see Fig. 4(a)), registration device 11 can recognize the attributes of the cash register bag 50 given to the user 30 and the emission rights attached to the cash register bag 50 can be separated and independently distributed.
More specifically, it is understood from the above described concept of carbon offset that when the organic product 50 is incinerated and CO₂ is emitted, the amount of CO₂ emissions generated by burning of a petroleum-derived component equivalent to the biomass-derived component contained in the organic product 50 is reduced. In addition, the amount of CO₂ emission reduction can be considered as an emission right which is not exhausted even if the cash register bag 50 is incinerated and can be independently distributed.

The cash register bag 50 (organic product) is configured in such a manner that biomass-derived component is mixed with a synthetic resin to form a composite resin film which is laminated into a bag shape, and can be recycled as a waste collection bag after the goods are put therein and brought back from the store 20.
For this purpose, a mark 52 is printed on the cash register bag 50 as needed to allow a waste collection operator to visually confirm the specified waste collection bag.

Fig. 4(a) is a table of information list of the cash register bags 50 authorized by the certification body R and registered in the registration device 11.
The biomass-derived component contained in the cash register bag 50 is preferably starch derived from rice, and old rice unfit for human consumption or contaminated rice is suitable from the spirit of the invention. Further, the synthetic resin has a low affinity for the starch, and thus preferably, carboxylic acid compatibilizer (surface activating agent) is mixed therewith. Furthermore, as the synthetic resin, polyolefin-based resin is suitable, and of them, high density polyethylene is desired.

Such a composite resin film is manufactured, for example, by the following method. First, raw rice soaked in water is heated and kneaded together with a polyethylene pellet at a preset temperature of 100 to 200°C by an extruder. Then, the polyethylene is melted and raw rice becomes paste-like starch, which is finely mixed with the compatibilizer at the molecular level thanks to the above described operation of the compatibilizer to form a homogeneous starch-polyethylene composite resin. When the starch-polyethylene composite resin is stretched into a film, the mechanical characteristics in no way inferior to 100% polyethylene film are obtained.
It is preferable that the higher the ratio of the biomass-derived component (starch) mixed with the composite resin, the higher the points of the emission rights are set. However, in consideration of the various properties desired for the cash register bag 50, the ratio of the biomass-derived component with respect to the total weight is desired to be in a range of 20 to 80 weight%.

The registration device 11 (Fig. 1) is connected to the communication network N via a router (not shown) provided in the certification body R to register the information list of the organic product 50 (Fig. 4(a)). More specifically, the registration device 11 regards the amount of carbon dioxide emissions generated by burning of a petroleum-derived component equivalent to the biomass-derived component contained in the cash register bag 50 (organic product 50) as the emission reduction amount, and registers the emission reduction amount in association with the print code 51 (product ID 51) of the cash register bag 50.

Further, the registration device 11 also registers the store ID (not shown) of the store 20 using the system 10A and the incineration site ID (not shown) of the incineration site 40 collecting and incinerating the cash register bag 50 distributed in the store 20.
When the reader terminal 22 in the store 20 processes the cash register bag 50, the registration device 11 acquires the corresponding store ID and product ID 51 via the communication network N and registers the emission reduction amount corresponding to the cash register bag 50 in association with the incineration site ID.
Note that the incineration site 40 (40a, 40b, and 40c) to which emission rights generated from the distributed cash register bag 50 are transferred is preliminarily associated with any one of the store ID and the product ID.
Note also that in order to associate the incineration site 40 to which emission rights are transferred with the product ID 51, the stores 20 (20a, 20b, and 20c) need to procure the cash register bag 50 on which a print code 51 each identifying the respective districts A, B, and C is printed from the manufacturer M.

The point card 31 illustrated in Fig. 3 is used for personal authentication of the users 30 (30a, 30b, and 30c). When a user settles for the goods purchased at the store 20, the user presents an operator of the processing terminal 21 (cash register) with the point card 31, and the processing terminal 21 reads the user ID 32 for personal authentication of the user.
When the cash register bag 50 is given to the user 30, the CO₂ emission rights attached to the cash register bag 50 are primarily transferred to the incineration site 40 which will incinerate the cash register bag 50 and are spent to pay for waste disposal.
Secondarily, a part of the profits of emission rights is returned to the user 30 to promote the use of a product containing a biomass-derived component. For this purpose, the user 30 can acquire the points corresponding to the CO₂ emission reduction amount of the cash register bag 50 received in association with the user ID 32 of the point card 31.

The point card 31 can be issued to the user 30 upon application at each store 20 (20a, 20b, and 20c). The point card 31. may not only handle CO₂ emission right points for the present invention but also be used as the ordinary shopping point card of the store 20.

Fig. 4(b) is a user list illustrating the personal information about the user 30 and the acquired points. Note that the user list registration may be managed by the registration device 11 so as to be deployed at all stores 20 participating the system 10, or may be managed by a separate server (not shown) connected to the information network N so as to allow each store 20 to perform its own independent business.

Thus, each time the user 30 receives a cash register bag 50, the basic point Y associated with the user ID 32 is electronically stored and registered.
On the contrary, the user can defer receiving a cash register bag 50. In this case, the user can receive emission right points for not only the biomass-derived component contained in the cash register bag 50 but also the petroleum-derived component contained in the bag 50 during the pending period. When the processing terminal 21 acquires a distribution pending information indicating that the user defers receiving a cash register bag 50, as illustrated in Fig. 4(b), a bonus point X is electronically stored and registered in the registration device 11 in association with the user ID 32 of the user.

The bonus points X can be collectively settled to receive a large waste collection bag (cash register bag 50). The total points of the bonus points X and the basic points Y are the accumulated points usable for the corresponding user ID 32.
When the user 30 buys goods at the store 20, the processing terminal 21 can execute settlement of redeeming the accumulated points. In other word, payment can be made by registration points instead of cash.

Further, the information list (Fig. 4(a)) and the user list (Fig. 4(b)) for the organic product 50 can be viewed by a browser (not shown) of a personal computer, a mobile phone, a mobile game machine, or the like capable of being connected to the communication network N. Thus, the user 30 can confirm the amount of CO₂ emission rights that the user possesses, can really feel comfortable contributing to environmental preservation, and can have more incentive to use the system 10.

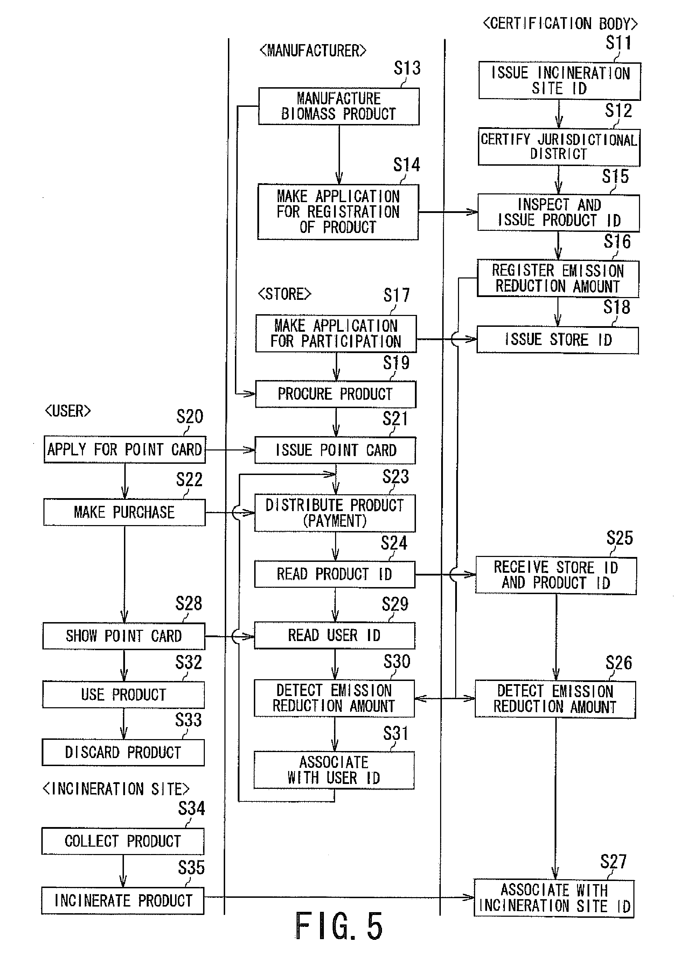

By referring to the time chart illustrated in Fig. 5, the procedure for the system 10A will be described. Here, the certification body R operating the system 10 is generally managed by a government body, but a part or all of the certification body R may be managed by a private body.
First, the certification body R issues an incineration site ID for each of the incineration sites 40 (40a, 40b, and 40c) which incinerate combustible waste (S11), and certifies the respective jurisdictional districts A, B, and C (S12).

Meanwhile, the manufacturer M develops and manufactures an organic product 50 containing a biomass-derived component (S 13), and makes application for registration to be adopted in the system 10A at the certification body R (S14). When the application for registration is received, the certification body R inspects whether the attribute information about the received information list (Fig. 4(a)) and the content of the desired characteristics (tensile strength, tear strength, texture, and like) are acceptable or not. If accepted, the certification body R issues the product ID corresponding to the organic product 50 (S15), and registers at least an emission reduction amount in the registration device 11 (S16).
Here, the relation between the mixing ratio of biomass in the cash register bag 50 and the desired general characteristics is often a trade-off. However, the higher the mixing ratio of biomass, the more the emission reduction amount increases. Thus, it is considered that the certification body R positively adopts such a cash register bag 50. Therefore, the manufacturer M has more incentive for developing cash register bags 50 excellent in quality and having a high mixing ratio of biomass and new business opportunities are expected to emerge.

Meanwhile, the store 20 makes application for the certification body R to participate in the system 10A (S 17), and asks the certification body R to issue the store ID (S18). Then, the store 20 procures the cash register bag 50 from the certification body R or the manufacturer M (S19).
Meanwhile, the user 30 applies for the point card 31 with the store 20 (S20), and asks the store 20 to issue the point card 31 (S21).
When the user 30 makes a purchase at the store 20 (S22), the user 30 brings goods to the processing terminal 21 (register), settles for the goods, and receives a cash register bag 50 (S23).
At this time, the operator of the processing terminal 21 sends the product ID of the cash register bag 50 read by the reader terminal 22 together with the information about the number of the distributed cash register bags to the registration device 11 via the communication network N (S24). Then, the certification body R receives the store ID and the product ID at the same time (S25), detects the emission reduction amount referred to by the information list (Fig. 4(a)) (S26), and associates the emission reduction amount with the corresponding incineration site ID (S27).

Note that most of the cash register bags 50 are used (S32), discarded (S33), collected (34), or incinerated (S35) for each of the districts A, B, and C in which the cash register bags are distributed. The period from (S32) to (S35) is very short.
For that reason, at the time when the organic product 50 is distributed (paid) at the store 20 (S23), even if only the CO₂ emission rights following the incineration of the organic product 50 are considered to remain in the corresponding incineration site 40, the time-related and quantitative error involved in the generation of emission rights can be ignored.
When the user 30 settles for the goods at the processing terminal 21 (register), the user 30 shows the point card 31 at the same time (S28). Then, the user ID 32 is read by the reader terminal 22 (S29), and the points (Fig. 4(a)) corresponding to the emission reduction amount are associated with the user ID 32 (S30 and S31).
Alternatively, the user 30 can defer receiving the cash register bag 50 (skip S23 and S24) to add the bonus point X and amass the points. Thus, the user has more incentive to take "My bag" to the store 20 and bring the purchased goods back home.

Therefore, next time when the user buys goods, the user can redeem all of a part of the accumulated points for settlement, or further can use a large cash register bag 50 as the waste collection bag 50. This can reduce the use of a small cash register bag 50 with little use value as the waste collection bag 50 to contribute to global environmental conservation.

### <Second embodiment>

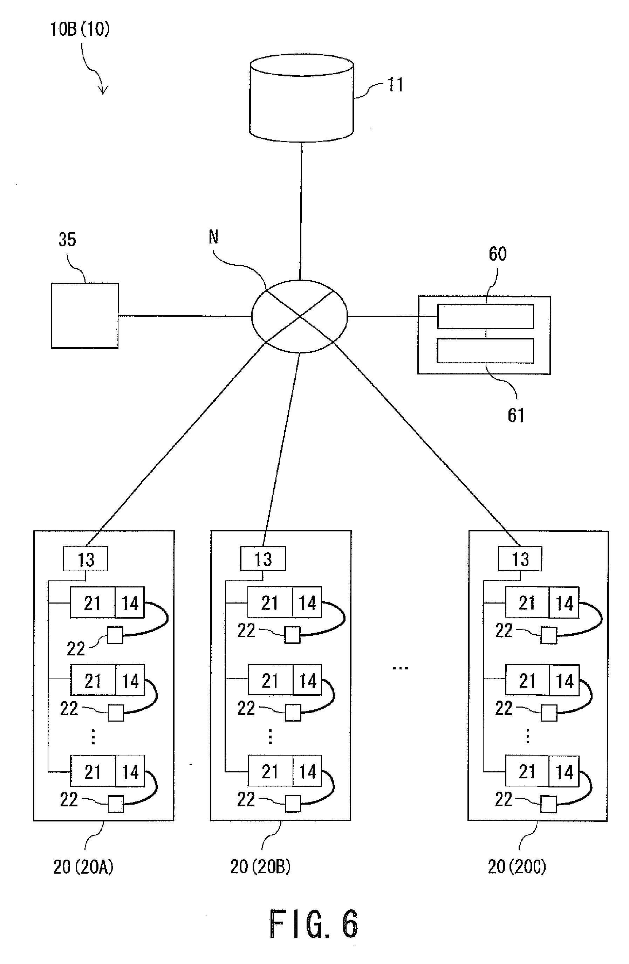

Hereinafter, by referring to Figs. 6 to 8, a second embodiment of the incineration system 10 for organic products will be described. The system 10B is configured such that the registration device 11 transmits information data to and from the stores 20 (20A, 20B, and 20C) functioning as the separation and transfer mechanism of emission rights via the communication network N.
Further, the registration device 11 and a payment device 60 are also configured to transmit information data to each other. Note that in FIG. 6, the same reference numerals or characters are assigned to the same component as those in FIG. 1, and the description thereof is omitted.

Although the cash register bag 50 has various attributes, the advantage of the reader terminal 22 reading the print code 51 is to eliminate the need for the store 20 to input the attribute information if the attribute information (see Fig. 4(a)) is collectively registered in the registration device 11 by the manufacturer. Thus, even a change in the type of the cash register bag 50 adopted does not impose a burden on the store 20 operating the system.

Further, the processing terminal 21 may include a specific device 14 which automatically acquires distribution information about the cash register bag 50 to be distributed based on the settlement for goods. When the goods to be purchased are determined, the type and the number of cash register bags 50 to be distributed are determined. The advantage of providing such a specific device 14 is to reduce the number of operations to be performed by the operator of the processing terminal 21 and to objectively assign the points of CO₂ emission rights (see Fig. 4(a)) because the cash register bags 50 to be distributed are determined independent of the operator. This can prevent users from abusing the system and the scheme by unnecessarily requesting a large number of cash register bags 50 from the operator simply for obtaining CO₂ emission rights.

The registration device 11 is connected to the communication network N via an interface (not shown) to accumulate the corresponding emission right points (see Fig. 4(a)) in association with the user ID of the user based on the distribution information about the cash register bag 50 acquired by the processing terminal 21 (register) of the store 20 (see Fig. 4(b)).

In settlement for goods, first, the point card 31 is shown to an operator of the processing terminal 21 (register) to read the user ID. Then, the operator makes settlement for goods and gives the user (purchaser) a cash register bag 50 necessary for carrying the goods.
When the cash register bag 50 is given to the user, the CO₂ emission rights of the cash register bag 50 are transferred to the user accordingly. It is understood from the above described concept of carbon offset that of the CO₂ emission rights, the CO₂ emission rights attributable to the biomass-derived component are not exhausted even if the cash register bag 50 is incinerated.
Thus, when the user receives the cash register bag 50 corresponding to the distribution information in Fig. 4(a), the user acquires the emission right points which can be transferred by redeeming the amount of CO₂ emissions attributable to biomass to points. Then, as illustrated in Fig. 4(b), the acquired emission right points are associated with the user ID of the user and electronically stored and accumulated in the registration device 11 as the basic points Y.

On the contrary, the user can defer receiving a cash register bag 50. In this case, during the pending period, the user can receive emission right points for the petroleum-derived component contained in the cash register bag 50 and emission right points generated at a manufacturing stage of the cash register bag 50. When the processing terminal 21 acquires distribution pending information indicating that the user defers receiving a cash register bag 50, as illustrated in Fig. 4(b), a bonus point X is electronically stored and accumulated in the registration device 11 in association with the user ID of the user.

The bonus points X can be collectively settled to receive a large waste collection bag (cash register bag 50). The total of the bonus points X and the basic points Y is the accumulated points usable for the corresponding user ID.
Further, regarding the accumulated points accumulated in the registration device 11, when the user buys goods, the processing terminal 21 can execute settlement of redeeming the accumulated points. In other word, payment can be made by using the accumulated points as cash.

Now, refer back to Fig. 6 to continue the description.
The browser 35 is an Internet terminal such as a personal computer, a mobile phone, a mobile game machine, or the like capable of being connected to the communication network N. The browser 35 accesses the registration device 11 to view the information list (see Fig. 4(a)) of the cash register bag 50, and view the accumulated points of the user ID of the specified users in the user list (see Fig. 4(b)) which is access-restricted by password.
Thus, the user of the system 10 can confirm the amount of CO₂ emission rights that the user possesses, can really feel comfortable contributing to environmental preservation, and can have more incentive to make further contributions.

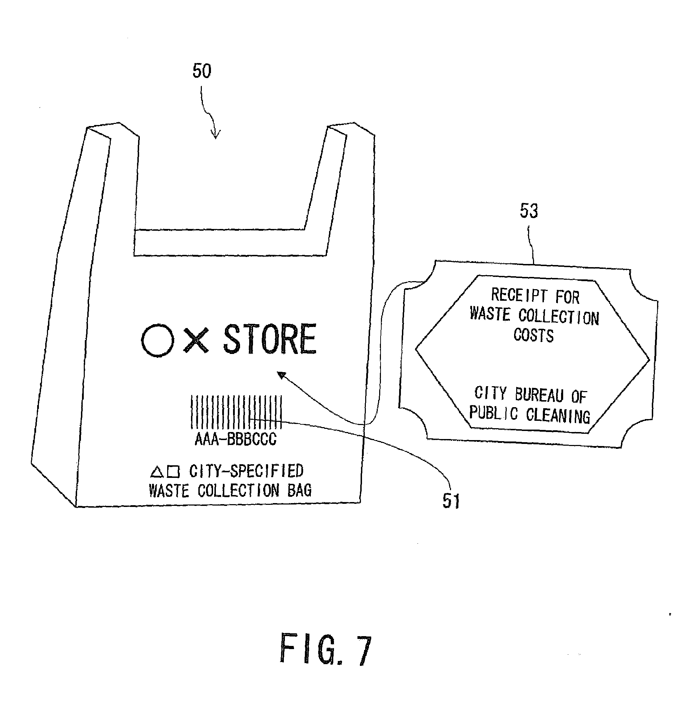

The payment device 60 is connected to the communication network N via an interface (not shown) to access the registration device 11 and use the accumulated points to settle for waste disposal costs.
More specifically, oversized waste, electronic waste, and other waste are generally charged, but a collector visits user home and uses a mobile payment device 60 to read the user ID of the point card 31 (Fig. 3) for payment. Alternatively, the user can take the waste to a disposal site and make payment. This allows the user to use the CO₂ emission rights that the user possesses to settle for waste disposal costs and thus to reduce cash spending.
When payment is made by the payment device 60, the receipt tag issuing device 61 issues the receipt tag 53 (see Fig. 7). In this case, examples of the payment device 60 and the receipt tag issuing device 61 include an automatic vending machine provided in the store 20 or in any other facility.
The receipt tag 53 is attached to the waste collection bag 20 to show that the waste collection costs have been paid. Examples of receipt tag include a visually identifiable sticker and an electronically readable tag.
When disposal of general household waste (combustible waste, raw waste, non-combustible waste, recyclable waste) is charged, the receipt tag 53 certifying paid waste at collection can be bought by points. Further, waste disposal with a low environmental load can be achieved by recycling a used cash register bag 50 as a waste collection bag 20.

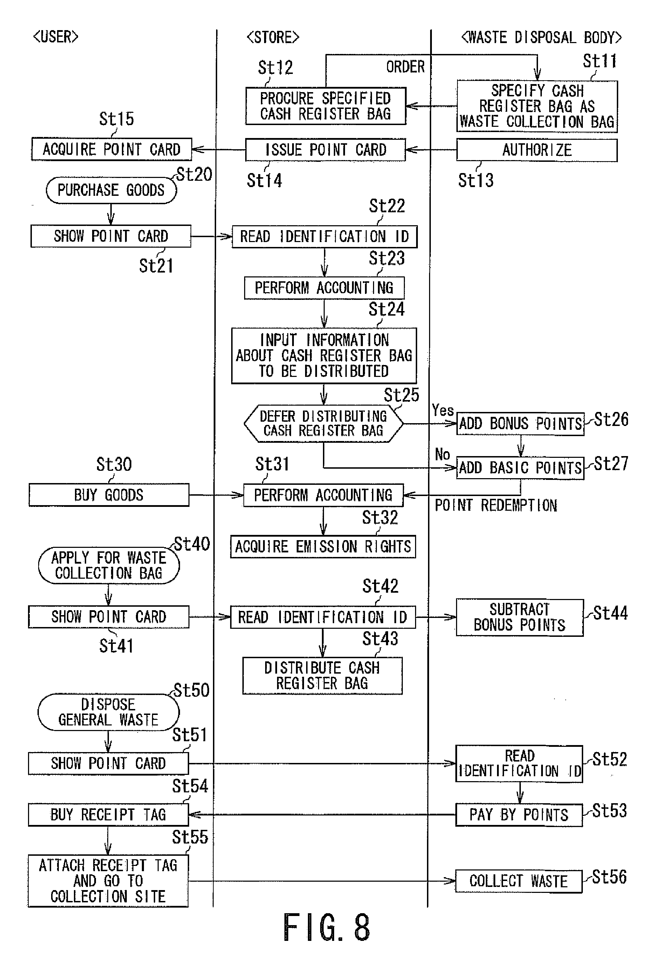

By referring to the time chart illustrated in Fig. 8, the procedure for the system 10B will be described. Here, the body (waste disposal body) operating the system 10B is generally managed by a government body, but a part or all of the body may be managed by a private body.
First, the waste disposal body specifies a cash register bag 50 (waste collection bag) to be adopted in the system 10B (St11). Here, the waste disposal body requires the manufacturer of the cash register bags 50 to submit the report on the test results regarding the attribute information illustrated in Fig. 4(a) and the desired characteristics (tensile strength, tear strength, texture, and like) and then specifies the cash register bags 50 that have passed the verification test.

The store 20 procures the cash register bag 50 at an appropriate time (periodically) from the manufacturer or the vendor (st12). In general, the relation between the mixing ratio of biomass in the cash register bag 50 and the desired general characteristics is often a trade-off. The store 20 can procure the cash register bags 50 based on market principles. This encourages newcomers to manufacture the cash register bags 50 excellent in quality and new business opportunities are expected to emerge. Moreover, the manufacturer of the cash register bags 50 has more incentive for developing cash register bags 50 that please the users, have a high mixing ratio of biomass, and are excellent in characteristics.
The store 20 authorized by the waste disposal body issues the point card 31 (Fig. 3) in response to the application from the user (St13, St14, and St15).

### <Purchase goods (St20)>

The user purchasing goods brings the goods to the processing terminal 21 (register) and shows the point card 31 (St21). Then, an operator of the processing terminal 21 uses the reader terminal 22 to read the user ID of the point card 31 (St22), and settles for the goods (St23). Then, the operator determines the size and the number of cash register bags 50 necessary for carrying back the goods and enters the distribution information (the product ID and the number of cash register bags) into the processing terminal 21 (St24). Note that the attached specific device 14 may be used to automatically enter the distribution information.

Then, the emission right points (see Fig. 4(a)) corresponding to the distribution information (the product ID and the number of cash register bags) are added as the basic points Y (Fig. 4(b)) (St25 to St27).
On the contrary, the user can defer receiving a cash register bag 50 (St25: Yes). In this case, the bonus points X are further added (St26). This encourages the user to bring "My bag" or his/her own shopping bag in the store 20 to carry back the goods purchased.

Then, next time when the user buys goods (St30), the user can redeem all or a part of the accumulated points for settlement (St31). Therefore, even if the user uses some points for waste disposal as described later, the user can use the remaining points for settlement of goods to be purchased next time. This encourages the user to defer receiving a cash register bag 50 and bring "My bag" to increase the points for settlement of goods to be purchased. Thus, the user has more incentive to cooperate with reduction in volume of waste, waste recycling, and waste separation for reduction in cost for waste collection and disposal.

Meanwhile, the store 20 can acquire the CO₂ emission rights corresponding to the points used by the user (St32). In other word, the CO₂ emission rights possessed by the user are returned to the store 20. The store 20 can use the CO₂ emission rights collected in this manner as market-tradable emission quotas. Specifically, the cash register bag 50 relatively high in market price can be procured at low price; the emission quotas can be used to pay for tax such as environmental taxes planned to be introduced in the future; or the refund of cost reductions in the waste disposal body can be obtained.

### <Apply for waste collection bag (St40)>

The user can use the accumulated bonus points X (Fig. 4(b)) to receive a large waste collection bag 20 free of charge. More specifically, the user shows the point card 31 (St41). Then, the processing terminal 21 (register) at the store 20 reads the user ID (St42). Then, the points corresponding to the size of the waste collection bag 20 are subtracted from the accumulated points (Fig. 4(b)) (St44). Thus, the user can receive only the large cash register bag 50 from the operator (St43). This can reduce the use of a small cash register bag 50 with little use value as the waste collection bag 20.

### <dispose general waste (St50)>

The user moves to the place where the payment device 60 is provided and shows the point card 31 (St51). Then, the payment device 60 reads the user ID (St52). Thus, the user uses the accumulated points (Fig. 4(b)) to buy the receipt tag 53 (St53 and St54).
Then, the user attaches the receipt tag 53 to the waste collection bag 20 and brings the waste collection bag to a collection site (St55). The waste collection body collects the waste collection bag (St56). This encourages the user to use a large waste collection bag 20 to collectively dispose general household waste, and thus the waste disposal body can reduce collection costs. Further, collective disposal using the large waste collection bag 20 encourages general household to separate waste, thus further contributing to reduction in cost of waste disposal.

Thus, the adoption of the present system enables the institutional design of eliminating the need to concentrate the global environment conservation costs on a specific sector and sharing the costs with all sectors covering the production, sales, consumption, and disposal of the products.

The incineration system for an organic product according to the present invention is not limited to the above described embodiments. More specifically, the present invention is applied to any system such that the carbon dioxide emission reduction amount corresponding to the biomass-derived component contained in the organic product is attached to the organic product as emission rights; and when the organic product disposed by the user is incinerated at the incineration site, and then the tradable emission rights are transferable.
Examples thereof include a case in which the organic product is assumed to be a local government-specified waste collection bag, which has a product ID associated with the emission reduction amount attributable to the biomass-derived component contained in the waste collection bag, which is adopted as a cash register bag to be distributed at a store such as a supermarket; and when the waste collection bag is incinerated, the emission rights attached to the waste collection bag (cash register bag) are transferred to and used by the local incineration site.

Examples thereof further include a case in which the emission rights attached to the waste collection bag (cash register bag) are separated and used as the points that can be transferred and accumulated.
Note that the embodiments describe such that the waste collection bag is placed at the store to be used as the cash register bag or the waste collection bag is provided when the user defers receiving a cash register bag, but the waste collection bag may be provided for a fee independently for combustible waste.

Note that the embodiments have exemplified the cash register bag and the waste collection bag as the organic product containing the biomass-derived component, but the organic product that can be handled by the present invention includes any organic product that is incinerated in a short period of time after given to the user. Examples thereof include a food packaging pack, a food tray, and like.
Note also that the embodiments have exemplified starch as the biomass-derived component contained in the organic product, but the present invention is not limited to this. For example, the biomass-derived component may include wood, grass plant, chitin/chitosan, seashell, and like.
Note also that such an organic product is not necessarily incinerated as the final disposal, but may be subject to landfill disposal or recycling. Therefore, the amount of CO₂ gas reduction achieved by execution of the present invention should be reviewed by considering the ratio between the amount of organic product provided and the amount of incineration disposal.

## Claims

1. An incineration system for an organic product containing a biomass-derived component, the system comprising:
a registration device which is connected to a communication network and which regards an amount of carbon dioxide emissions generated by burning of a petroleum-derived component equivalent to the biomass-derived component contained in the organic product as an emission reduction amount, and registers the emission reduction amount in association with a product ID of the organic product; and
a reader terminal which is installed in a store in which the organic product is provided and which reads the product ID attached to the organic product when the organic product is provided, sends code data thereof to the communication network, and causes the registration device to acquire the code data, wherein
the registration device in which an incineration site ID associated with the store ID or the product ID is registered, registers the emission reduction amount in association with the incineration site ID.

2. The incineration system for an organic product according to claim 1, wherein
when a user makes settlement at the store, the reader terminal reads the user ID together with the product ID; and
the registration device registers points equivalent to the emission reduction amount in association with the user ID.

3. The incineration system for an organic product according to claim 2, wherein
when a distribution information about a waste collection bag is received, the registration device redeems the points registered in the user ID.

4. The incineration system for an organic product according to claim 2, wherein
the organic product is a cash register bag distributed for the user to carry back goods purchased, and
when a distribution pending information about the cash register bag is received, the registration device adds and registers a bonus point to and in the user ID.

5. An incineration system for an organic product containing a biomass-derived component, the system comprising:
a registration device which is connected to a communication network and which regards an amount of carbon dioxide emissions generated by burning of a petroleum-derived component equivalent to the biomass-derived component contained in the organic product as an emission reduction amount, and registers the emission reduction amount in association with a product ID of the organic product; and
a reader terminal which is installed in a store in which the organic product is provided and which reads the product ID attached to the organic product when the organic product is provided, sends code data thereof to the communication network, and causes the registration device to acquire the code data, wherein
when a user makes settlement at the store, the reader terminal reads the user ID together with the product ID; and
the registration device registers points equivalent to the emission reduction amount in association with the user ID.

6. The incineration system for an organic product according to claim 5, wherein
when a distribution information about a waste collection bag is received, the registration device redeems the points registered in the user ID.

7. The incineration system for an organic product according to claim 5, wherein
the organic product is a cash register bag distributed for the user to carry back goods purchased, and
when a distribution pending information about the cash register bag is received, the registration device adds and registers a bonus point to and in the user ID.

8. The incineration system for an organic product according to claim 5, further comprising a receipt tag issuing device which issues a receipt tag to be attached to the waste collection bag to show that waste collection costs are paid by using the points accumulated in the registration device.

9. The incineration system for an organic product according to claim 5, further comprising a processing terminal which, when the user buys goods, executes the settlement by redeeming the points accumulated in association with the user ID.
